Europäisches Patentamt

European Patent Office

Office européen des brevets

(19)

(11) Veröffentlichungsnummer: **0 233 445**
**B1**

(12) ## EUROPÄISCHE PATENTSCHRIFT

(45) Veröffentlichungstag der Patentschrift:
24.05.89

(51) Int. Cl.⁴: **F16K 15/03**

(21) Anmeldenummer: **86890303.0**

(22) Anmeldetag: **05.11.86**

(54) **Rückschlagventil.**

(30) Priorität: **20.11.85 AT 3377/85**

(43) Veröffentlichungstag der Anmeldung:
**26.08.87 Patentblatt 87/35**

(45) Bekanntmachung des Hinweises auf die Patenterteilung:
**24.05.89 Patentblatt 89/21**

(84) Benannte Vertragsstaaten:
**BE DE ES FR GB IT**

(56) Entgegenhaltungen:
**CH-A- 449 357**
**DE-C- 503 294**
**US-A- 1 720 444**
**US-A- 3 074 429**

(73) Patentinhaber: **HOERBIGER VENTILWERKE AKTIENGESELLSCHAFT, Braunhubergasse 23, A-1110 Wien(AT)**

(72) Erfinder: **Bauer, Friedrich, Dipl.-Ing. Dr. techn., Endresstrasse 92, A-1238 Wien(AT)**

(74) Vertreter: **Klein, Adam, Dipl.Ing., Fasangasse 49, A-1030 Wien(AT)**

## Beschreibung

Die Erfindung bezieht sich auf ein Rückschlagventil zum Absperren von Leitungen, z.B. der Saugleitung von Verdichtern, mit einem in einem Ventilgehäuse vorgesehenen Ventilsitz, der durch eine um eine Schwenkachse verschwenkbar gelagerte Klappe verschließbar ist, die von einem Rückstellgewicht in Schließrichtung belastet ist.

Aus der GB-PS 983 799 is ein Rückschlagventil dieser Bauart bekannt, bei dem die schwenkbar gelagerte Klappe auf ihrer dem Ventilsitz abgewendeten Seite einen Vorsprung aufweist, der ein Rückstellgewicht zum Zurückstellen der Klappe in die Schließstellung bildet. Durch diesen Vorsprung ist die Klappe unhandlich und schwer, so daß sie bei der Öffnungs- und Schließbewegung träge reagiert. Außerdem beansprucht der Vorsprung zusätzlichen Raum im Inneren des Ventilgehäuses.

Ein weiteres bekanntes Rückschlagventil der genannten Bauart ist in der US-PS 1 507 001 beschrieben. Die als zylindrische Welle ausgebildete Schwenkachse der Ventilklappe ist dort aus dem Gehäuse herausgeführt und mit einem drehfest auf der Schwenkachse sitzenden Arm versehen, der ein Rückstellgewicht trägt. Der Arm mit dem Rückstellgewicht ist auf der Schwenkachse so angeordnet, daß er bei geschlossener Klappe oder kurz vor der Schließstellung derselben etwa horizontal, bei offener Klappe dagegen fast vertikal verläuft. Die durch das Rückstellgewicht ausgeübte Schließkraft ist daher in oder kurz vor der Schließstellung der Klappe am größten, in der geöffneten Stellung dagegen verhältnismäßig klein. Trotzdem hat auch dieses bekannte Rückschlagventil, wie die zuerst beschriebene bekannte Ausführung, den Nachteil, daß bei einer Strömungsumkehr im Ventilgehäuse, in welchem Fall das Rückschlagventil schnell schließen soll, die Schließbewegung verhältnismäßig langsam erfolgt, weil zusammen mit der Klappe auch das Gegengewicht beschleunigt werden muß. Aufgrund dieser großen Masse und auch durch das vom Rückstellgewicht in Schließrichtung der Klappe ausgeübte Drehmoment schlägt die Ventilklappe verhältnismäßig hart auf dem Ventilsitz auf. Dabei kann es vorkommen, daß die Ventilklappe nach dem Aufschlagen zurückprallt und den Ventilsitz kurzzeitig nochmals freigibt.

Der Erfindung liegt die Aufgabe zu Grunde, die Rückschlagventile der eingangs genannten Bauart so zu verbessern, daß die angeführten Nachteile der bekannten Ausführungen vermieden werden, insbesondere eine rasche und unbehinderte Schließbewegung der Klappe ermöglicht, ein nachteiliges Zurückprallen der Klappe vom Ventilsitz aber vermieden wird.

Mit der Erfindung wird diese Aufgabe dadurch gelöst, daß das Rückstellgewicht unabhängig von der Klappe verschwenkbar gelagert und mit einem Mitnehmeranschlag versehen ist, der in Richtung der Schließbewegung der Klappe an einem Gegenanschlag derselben frei anschlägt. Bei dieser Ausführung liegt das Rückstellgewicht bei geschlossenem Rückschlagventil an der Klappe an und übt die volle Schließkraft aus. Die Öffnungsbewegung der Klappe geht wie bei den bekannten Ausführungen vor sich, wobei der Durchgangsquerschnitt zur Gänze freigegeben werden kann. Sobald aber die Strömung durch das Rückschlagventil aufhört, wird die Klappe unabhängig vom Rückstellgewicht beschleunigt und durch das zurückströmende Medium rasch auf den Ventilsitz gedrückt. Die Klappe eilt dabei dem Rückstellgewicht voraus, welches auf Grund seiner größeren Masse langsamer nachfolgt, bis sein Anschlag auf den Gegenanschlag der Klappe auftrifft. Anschließend hält das Rückstellgewicht die Klappe auch beim Aufhören der Strömung sicher auf dem Ventilsitz fest. Ein nachteiliges kurzzeitiges' Lüften der Klappe nach dem ersten Aufschlagen auf den Ventilsitz wird vermieden.

In weiterer Ausgestaltung der Erfindung kann wenigstens einer der zusammenwirkenden Anschläge des Rückstellgewichtes und der Klappe mit einer Dämpfungsauflage versehen sein. Dadurch wird nicht nur das Aufschlagen der beiden Anschläge aufeinander gedämpft, sondern es wird auch verhindert, daß das Rückstellgewicht nach dem Auftreffen auf die Klappe in Richtung der Öffnungsbewegung derselben zurückprallt.

Weiterhin kann erfindungsgemäß am Ventilgehäuse ein Endanschlag für das Rückstellgewicht in Richtung der Öffnungsbewegung der Klappe vorgesehen sein, wobei der Endanschlag vorzugsweise eine Dämpfungsauflage aufweist. Damit ist die Lage des Rückstellgewichtes und der zugehörigen Ventilklappe bei geöffnetem Rückschlagventil genau definiert und es werden durch die Dämpfungsauflage harte Aufschläge des Rückstellgewichtes in der Endlage vermieden. Aufgrund der unabhängig verschwenkbaren Lagerung von Klappe und Gegengewicht ist es auch möglich, für die Klappe einen eigenen Endanschlag vorzusehen und das Gegengewicht an einem weiteren Anschlag später abzufangen.

Die Klappe und das Rückstellgewicht können auf derselben Schwenkachse im Ventilgehäuse gelagert sein. Eine bevorzugte Ausführungsform besteht dabei darin, daß an der dem Ventilsitz abgewendeten Unterseite der Klappe ein als Gegenanschlag dienender Vorsprung und von diesem ausgehende, U-förmig angeordnete Arme befestigt sind, die an ihren Enden die Schwenklager der Klappe tragen, zwischen denen das Rückstellgewicht mit einer Lagerbohrung gelagert ist, an deren Unterseite der Anschlag vorragt. Diese Anordnung ist verhältnismäßig einfach und sichert eiune genaue Führung derKlappe und des Rückstellgewichtes, sowohl bei der gemeinsamen Öffnungsbewegung als auch bei der Schwenkbewegung der Klappe und des Rückstellgewichtes relativ zueinander.

In der Zeichnung ist ein Ausführungsbeispiel der Erfindung dargestellt. Fig. 1 zeigt das erfindungsgemäße Rückschlagventil in einem axialen Mittelschnitt und Fig. 2 dazu die Klappe samt Gegengewicht in einer Ansicht von unten.

Das dargestellte Rückschlagventil besitzt ein Ventilgehäuse 1 mit einem Durchgangskanal 2, in dem ein Ventilsitz 3 vorgesehen ist, der durch eine Klappe 4 gesteuert ist. Die Klappe 4 ist auf einer Schwenkachse 5 angeordnet, deren Enden im Ventilgehäuse 1 gehalten sind. Auf derselben Schwenkachse 5 ist ein Rückstellgewicht 6 gelagert, das im strömungslosen Zustand die Klappe 4 auf dem Ventilsitz 3 hält. Das Rückstellgewicht 6 weist auf seiner der Klappe 4 zugewendeten Seite einen Mitnehmeranschlag 7 auf, der mit einer Dämpfungsauflage 8 aus schlagdämpfendem Material versehen ist. An der Unterseite der Klappe 4 befindet sich ein rippenförmiger Vorsprung 9, der mit seinem Ende einen Gegenanschlag 10 bildet. Oberhalb der Schwenkachse 5 ist im Ventilgehäuse 1, an der Außenwand des Durchgangskanales 2, ein Endanschlag 11 vorgesehen, der gleichfalls mit einer Dämpfungsauflage versehen sein oder selbst aus schlagdämpfendem Material bestehen kann.

Aus Fig. 2 ist zu erkennen, daß die Klappe 4 und das Rückstellgewicht 6 auf derselben Schwenkachse 5 gelagert sind. An der Unterseite der Klappe 4 ist der Vorsprung 9 mit dem Gegenanschlag 10 zu erkennen. Vom Vorsprung 9 gehen U-förmig angeordnete Arme 12 aus, die an ihren Enden je ein Schwenklager 13 der Klappe 4 tragen. Zwischen den beiden Schwenklagern 13 ist das Gegengewicht 6 mit einer Lagerbohrung 14 auf die Schwenkachse 5 augeschoben. An der Unterseite des Rückstellgewichtes 6 befindet sich der Anschlag 7 mit der Dämpfungsauflage 8. Es ist zu erkennen, daß die Dämpfungsauflage 8 am Gegenanschlag 10 des Vorsprungs 9 der Klappe 4 fest anliegt.

Im Ruhezustand, wenn kein Strömungsmittel durch den Durchgangskanal 2 des Ventilgehäuses 1 hindurchgeleitet wird, liegt die Klappe 4 fest auf dem Ventilsitz 3 auf und wird durch das Rückstellgewicht 6 in dieser Lage gehalten. Sobald Strömungsmittel in Richtung des Pfeiles 5 durch den Durchgangskanal 2 geleitet wird, hebt dieses die Klappe 4 gegen die vom Rückstellgewicht 6 ausgeübte Schließkraft vom Ventilsitz 3 ab, so daß das Strömungsmittel durch das Ventilgehäuse 1 hindurchströmen kann. Die Klappe 4 wird dabei zusammen mit dem Rückstellgewicht 6 so weit verschwenkt, bis das Rückstellgewicht 6 am Endanschlag 11 anliegt. In dieser Stellung, die in der Zeichnung nicht dargestellt ist, erstreckt sich die Klappe 4 im Ausführungsbeispiel nach Fig. 1 ungefähr vertikal nach unten, so daß der gesamte Durchgangsquerschnitt des Ventilsitzes 3 freigegeben ist und das Strömungsmittel ungehindert durch das Rückschlagventil 1 hindurchströmen kann.

Das Rückstellgewicht 6 belastet die Klappe 4 in Schließrichtung. Sobald die Strömung aufhört, entsteht eine Rückströmung in entgegengesetzter Richtung durch den Durchgangskanal 2, die auch in Schließrichtung auf die Klappe 4 wirkt. Diese Rückströmung erfaßt die Klappe 4 und zieht sie in Richtung des in Fig. 1 eingezeichneten Pfeiles 16 auf den Ventilsitz 3. Wie in Fig.1 strichpunktiert angedeutet ist, eilt die Klappe 4 hiebei auf Grund der vom Rückstellgewicht 6 getrennten, geteilten Ausbildung dem Rückstellgewicht 6 voraus. Die Schließbewegung geht deshalb rasch vor sich, weil nur die verhältnismäßig kleine Masse der Klappe 4 beschleunigt werden muß. Das Rückstellgewicht 6 folgt auf Grund seines Eingengewichtes mit kleinerer Beschleunigung nach, bis der Anschlag 7 mit der Dämpfungsauflage 8 auf dem Gegenanschlag 10 der Klappe 4 autrifft und so diese auf dem Ventilsitz 3 festhält.

Die geringe Masse der Klappe 4, die durch die Rückströmung zu beschleunigen ist, sichert ein rasches Schließen des Ventils. Außerdem bewirkt die kleine Masse der Klappe 4 einen milden Aufschlag derselben auf den Ventilsitz 3. Es wird dadurch verhindert, daß die Klappe 4 nach dem Aufschlagen vom Ventilsitz 3 zurückprallt und diesen kurzzeitig nochmals lüftet. Auch der Verschleiß und die Bruchgefahr werden entsprechend herabgesetzt. Nach dem Schließen des Ventils baut sich zwischen den beiden Seiten der Klappe eine Druckdifferenz auf, die das Ventil sicher geschlossen hält.

## Patentansprüche

1. Rückschlagventil zum Absperren von Leitungen, z.B. der Saugleitung von Verdichtern, mit einem in einem Ventilgehäuse vorgesehenen Ventilsitz, der durch eine um eine Schwenkachse verschwenkbar gelagerte Klappe verschließbar ist, die von einem Rückstellgewicht in Schließrichtung belastet ist, dadurch gekennzeichnet, daß das Rückstellgewicht (6) unabhängig von der Klappe (4) verschwenkbar gelagert und mit einem Mitnehmeranschlag (7) versehen ist, der in Richtung der Schließbewegung der Klappe (4) an einem Gegenanschlag (10) derselben frei anschlägt.

2. Klappenventil nach Anspruch 1, dadurch gekennzeichnet, daß wenigstens einer der zusammenwirkenden Anschläge (7,10) des Rückstellgewichtes (6) und der Klappe (4) mit einer Dämpfungslauflage (8) versehen ist.

3. Klappenventil nach Anspruch 1 oder 2, dadurch gekennzeichnet, daß am Ventilgehäuse (1) ein Endanschlag (11) für das Rückstellgewicht (6) in Richtung der Öffnungsbewegung der Klappe (4) vorgesehen ist, wobei der Endanschlag (11) vorzugsweise eine Dämpfungsauflage aufweist.

4. Klappenventil nach Anspruch 1, 2 oder 3, wobei die Klappe unddas Rückstellgewicht auf derselben Schwenkachse gelagert sind, dadurch gekennzeichnet, daß an der dem Ventilsitz (3) abgewendeten Unterseite der Klappe (4) ein als Gegenanschlag (10) dienender Vorsprung (9) und von diesem ausgehende, U-förmig angeordnete Arme (12) befestigt sind, die an ihren Enden Schwenklager (13) der Klappe (4) tragen, zwischen denen das Rückstellgewicht (6) mit einer Lagerbohrung (14) gelagert ist, an deren Unterseite der Anschlag (7) vorragt.

## Claims

1. A nonreturn valve for shutting of lines, for example, the suction line of compressors, comprising a valve seat disposed in a valve housing, said valve seat being closed by a flap swingably supported on a swivel axis, said flap being biassed by a biassing weight in the closing direction, characterized in that the biassing weight (6) is swingably supported independently of the flap (4) and is provided with a follower detent (7) which freely strikes a counterdetent (10) in the direction of the closing motion of said flap.

2. A flap valve according to claim 1, characterized in that a least one of the interacting detents (7,10) of the biassing weight (4) and of the flap (4) is provided with a damping coating (8).

3. A flap valve according to claim 1 or 2, characterized in that on the valve housing (1) there is disposed a limit stop (11) for the biassing weight (6) in the direction of the opening motion of the flap (4) and that said limit stop (11) preferably has a damping coating.

4. A flap valve according to claims 1, 2 or 3, the flap and the biassing weight being supported on the same swivel axis, characterized in that on the flap underside turned away from the valve seat (3) there are secured a salient (9) serving as a counterdetent (10), and U-shaped arms (12) emanating therefrom carrying at their ends the swivel supports (13) of the flap (4) between which the biassing weight (6) is supported by a supporting borehole (14) and that the detent (7) projects on the underside thereof.

**Revendications**

1. Clapet de retenue pour fermer des conduites, telles que par exemple la conduite d'aspiration de compresseurs, comportant un siège qui est prévu dans un corps et qui peut être fermé par un obturateur monté à pivotement sur un axe de pivotement et chargé dans le sens de la fermeture par un poids de rappel, caractérisé par le fait que le poids de rappel (6) est monté de manière à pouvoir pivoter indépendamment de l'obturateur (4) et est muni d'une butée-entraîneur (7) qui, dans le sens du mouvement de fermeture de l'obturateur (4), vient librement s'appliquer contre une contre-butée (10) de l'obturateur.

2. Clapet selon revendication 1, caracterisé par le fait qu'au moins l'une des butées (7,10) coopérantes de poids de rappel (6) et de l'obturateur (4) est munie d'une garniture d'amortissement (8).

3. Clapet selon revendication 1 ou 2, caractérisé par le fait qu'il est prévu, sur le corps (1) une butée de fin de course (11) limitant la course du poids de rappel (6) dans la direction du mouvement d'ouverture de l'obturateur (4), cette butée de fin de course (11) présentant de préférence une garniture d'amortissement.

4. Clapet selon revendication 1, 2 ou 3, dans lequel l'obturateur et le poids de rappel sont montés sur le même axe de pivotement, caractérisé par le fait qu'un relief (9) servant de contre-butée (10) et des bras (12) partant de celui-ci et disposés selon une configuration en U sont fixés sur le côté inférieur, éloigné du siège (3), de l'obturateur (4), lesdits bras portant en leurs extrémités des paliers de pivotement (13) de l'obturateur (4), entre lesquels le poids de rappel (6) est monté au moyen d'un trou de palier (14), la butée (7) formant saille sur le côté inférieur du poids de rappel.